# FASCICULE DE BREVET EUROPEEN

(11) **EP 1 545 909 B1**
(45) Date de publication et mention de la délivrance du brevet: **24.02.2016**
(21) Numéro de dépôt: 03792265.5
(22) Date de dépôt: 06.08.2003
(51) Int. Cl.: B60C 9/22

(54) **PNEUMATIQUE POUR DEUX ROUES**
REIFEN FÜR ZWEIRÄDRIGE FAHRZEUGE
TYRE FOR TWO-WHEELED VEHICLES

(30) Priorité: 09.08.2002 FR 0210186; 18.11.2002 FR 0214414
(43) Date de publication de la demande: 29.06.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: PROST, Pascal, F-63200 Riom (FR); VALLE, Alain, F-63118 Cebazat (FR); CHAYLARD, Yann, F-63100 Clermont-Ferrand (FR)
(74) Mandataire: Le Cam, Stéphane Georges Elie
(86) Numéro de dépôt international: PCT/EP2003/008707
(87) Numéro de publication internationale: WO 2004/018236

(56) Documents cités:
- EP-A- 0 191 124
- EP-A- 1 075 968
- WO-A-02/09956
- GB-A- 1 038 769
- US-A- 5 301 730

## Description

La présente invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux nappes d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux nappes de sommet d'éléments de renforcement parallèles entre eux dans chaque nappe mais croisés d'une nappe à la suivante en faisant avec la direction circonférentielle des angles aigus, de tels pneumatiques étant plus particulièrement adaptés pour l'avant des motos. Les dites deux nappes de sommet peuvent être surmontées radialement d'au moins une nappe d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

La réalisation de tels pneumatiques et notamment des pneumatiques comportant des câbles circonférentiels nécessitent des temps de fabrication non négligeables conduisant à des coûts de production élevés. En outre, la quantité de matière nécessaire à la réalisation des pneumatiques comportant ces câbles circonférentiels contribuent également à l'importance de ces coûts.

Il est également connu du document WO-A-02/09956 des pneumatiques pour motocyclette comportant des moyens anti-vibration disposé dans la zone de jonction de l'épaule et du flanc, lesdits moyens pouvant être constitués de renforts circonférentiels, ayant les caractéristiques du préambule de la revendication 1.

Il est encore connu du document EP 1075 968 de réaliser des pneumatiques à bruit de roulement réduit comportant une nappe de renforts circonférentiels disposés radialement intérieurement à la nappe de carcasse au niveau du sommet du pneumatique.

L'invention a pour but de réaliser des pneumatiques pour motocyclette comportant au moins une couche d'éléments circonférentiels à des coûts inférieurs à ceux actuellement obtenus, sans nuire pour autant aux propriétés, nécessaires à la satisfaction des utilisateurs.

Ce but a été atteint selon l'invention par un pneumatique selon la revendication 1.

Selon un premier mode de réalisation de l'invention, ledit pas au centre (sommet) de la bande de roulement est moins important qu'aux bords de ladite couche. Une telle réalisation selon l'invention favorise notamment une résistance aux agressions extérieures qui sont plus importantes dans la zone centrale du pneumatique.

Selon un second mode de réalisation de l'invention, ledit pas au centre (sommet) de la bande de roulement est plus important qu'aux bords de ladite couche. Une telle réalisation selon l'invention favorise notamment la mise à plat du pneumatique à fort carrossage.

Selon l'invention, les éléments de renforcement sont dits circonférentiels lorsqu'ils forment un angle avec la direction longitudinale inférieur à 8°.

Avantageusement, dans le cas d'une structure radiale, les éléments de renforcement de la structure de renfort de type carcasse font avec la direction circonférentielle un angle compris entre 65° et 90°.

Le centre ou sommet de la bande de roulement est défini par le plan équatorial du pneumatique.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

Les éléments de renforcement circonférentiels peuvent être constitués par un enroulement hélicoïdal d'un ou plusieurs fils indépendants. Ils peuvent encore être réalisés à partir de bandelettes comprenant plusieurs fils noyés dans un matériau telle que du caoutchouc.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent comme par exemple un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

L'invention prévoit donc qu'au moins une couche d'éléments de renforcement circonférentiels est positionnée au moins partiellement radialement à l'intérieur d'au moins une structure de renfort de type carcasse. La position radialement intérieure d'au moins une partie de la couche d'éléments de renforcement circonférentiels permet d'obtenir des temps de pose réduit par rapport à ceux des pneumatiques usuels, le rayon de pose étant inférieur ; en outre, de ce fait la quantité de matière nécessaire à la réalisation de la couche est également réduite. La quantité de matière est encore réduite du fait de la pose selon un pas variable qui permet d'optimiser la quantité de matière nécessaire selon la direction transversale.

Lorsque le pneumatique comporte au moins deux structures de renfort de type carcasse, l'invention prévoit selon un mode de réalisation de l'invention qu'au moins une couche d'éléments de renforcement circonférentiels est positionnée au moins partiellement radialement entre deux structures de renfort de type carcasse.

Selon un autre mode de réalisation de l'invention lorsque le pneumatique comporte au moins deux structures de renfort de type carcasse, au moins une couche d'éléments de renforcement circonférentiels est positionnée au moins partiellement radialement à l'intérieur d'au moins deux structures de renfort de type carcasse pour réduire encore la quantité de matière nécessaire à la réalisation de la couche d'éléments de renforcement circonférentiels.

Selon une variante de réalisation, lesdits éléments de renforcement circonférentiels sont répartis selon la direction transversale avec un pas variable tel que la valeur du pas selon la direction transversale obéit à une suite mathématique sur au moins une partie de la largeur axiale de ladite couche.

Selon une réalisation préférée de l'invention, la valeur du pas selon la direction transversale obéit à une suite sur au moins une partie de la largeur axiale de ladite couche allant jusqu'aux bords de ladite couche. Selon une telle réalisation, le pas entre les éléments de renforcement circonférentiels de ladite couche est avantageusement constant dans une zone couvrant le sommet de la bande de roulement.

Selon un premier mode de réalisation, la valeur du pas obéit à une suite arithmétique de type U(n) = Uo + nr, avec Uo compris entre 0,4 mm et 2,5 mm, et r, la raison de la suite compris entre 0,001 et 0,1.

Selon un deuxième mode de réalisation, la valeur du pas obéit à une suite géométrique de type U(n) = Uo x rⁿ, avec Uo compris entre 0,4 mm et 2,5 mm, et r, la raison de la suite compris entre 1,001 et 1,025.

Selon d'autres modes de réalisation de l'invention, la valeur du pas peut être une combinaison de plusieurs suites en fonction de la position axiale sur ladite couche.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Selon l'invention, le pneumatique comporte une seule couche d'éléments de renforcement circonférentiels s'étendant dans les flancs au-delà des points de tangence de l'abscisse curviligne de la structure de renfort de type carcasse avec des perpendiculaires à l'axe de rotation, selon le profil du pneumatique dans un plan radial, la partie de la couche d'éléments circonférentiels, radialement intérieure aux deux points de tangence de l'abscisse curviligne de la structure de renfort de type carcasse avec des perpendiculaires à l'axe de rotation est radialement intérieure à la structure de renfort de type carcasse, radialement intérieure aux deux points de tangence de l'abscisse curviligne de la structure de renfort de type carcasse avec des perpendiculaires à l'axe de rotation.

En d'autres termes selon l'invention, la partie de la couche d'éléments circonférentiels, radialement extérieure aux deux points de tangence de l'abscisse curviligne de la structure de renfort de type carcasse avec des perpendiculaires à l'axe de rotation, est au moins partiellement axialement à l'intérieur de la structure de renfort de type carcasse et la partie de la couche d'éléments circonférentiels, radialement intérieure aux deux points de tangence de l'abscisse curviligne de la structure de renfort de type carcasse avec des perpendiculaires à l'axe de rotation, est axialement à l'extérieur de la structure de renfort de type carcasse.

L'invention vise une réalisation moins onéreuse et vise en conséquence à diminuer les temps de pose de la couche d'éléments circonférentiels et la quantité de matière.

Selon l'invention la couche d'éléments de renforcement circonférentiels s'étend dans une partie des flancs, la position radialement intérieure de ladite couche par rapport à la structure de carcasse conduit à la mise en place des éléments de renforcement circonférentiels après la structure de carcasse dans cette partie du pneumatique lors de la fabrication du pneumatique.

Il apparaît donc que la réalisation du pneumatique ou tout au moins l'ordre de mise en place des constituants selon l'invention est différent entre au moins une partie de la zone sommet et la partie des flancs lorsque la couche d'éléments de renforcement circonférentiels est également présente sur au moins une partie des flancs.

Un pneumatique selon l'invention, dans lequel au moins une partie de la structure de renforcement de sommet, et plus spécifiquement au moins une partie d'une couche d'éléments de renforcement circonférentiels, étant réalisée radialement à l'intérieur de la structure de carcasse, est avantageusement réalisé selon une technique de fabrication du type sur noyau dur ou toroïdal, ou forme rigide.

Il est très avantageux de réaliser le pneumatique ainsi défini selon l'invention suivant une technique de fabrication sur noyau dur ou rigide, ledit noyau définissant la cavité intérieure du pneumatique. Ce type de technique de fabrication présente l'avantage de disposer les différents constituants nécessaires à sa réalisation directement dans leur position finale sans que le profil du pneumatique soit modifié durant sa confection.

Une réalisation avantageuse de l'invention prévoit que la structure de renforcement de sommet comporte en outre au moins une couche de travail constituée d'éléments de renforcements et qu'au moins dans la zone centrale de ladite couche de travail lesdits éléments de renforcement forment un angle avec la direction longitudinale compris entre 10 et 80°.

La zone centrale d'une couche de travail est une zone circonférentielle de ladite couche axialement comprise entre deux zones latérales, axialement extérieure à ladite zone centrale. Cette zone centrale est selon une réalisation préférée de l'invention centrée sur le sommet de la bande de roulement du pneumatique.

Le centre ou sommet de la bande de roulement est défini par le plan équatorial du pneumatique.

Selon une réalisation préférée de l'invention, la structure de renforcement de sommet du pneumatique comporte au moins deux couches d'éléments de renforcement telles que d'une couche à la suivante les éléments de renforcement forment entre eux des angles compris entre 20 et 160°.

Dans une variante de réalisation de l'invention, notamment pour améliorer les performances d'adhésion, de motricité et de confort des pneumatiques, les angles formés par lesdits éléments de renforcement des couches de travail avec la direction longitudinale sont variables selon la direction transversale tels que lesdits angles sont supérieurs sur les bords axialement extérieurs des couches d'éléments de renforcement par rapport aux angles desdits éléments mesurés au niveau du plan équatorial du pneumatique. De telles variations d'angles permettent de modifier les rigidités locales longitudinales, méridiennes et de cisaillement.

Un premier mode de réalisation de cette variante consiste à faire varier l'angle des éléments de renforcement d'une manière monotone depuis le plan équatorial du pneumatique jusqu'aux bords de la couche de travail.

Un second mode de réalisation de cette variante consiste à faire évoluer l'angle par palier depuis le plan équatorial du pneumatique jusqu'aux bords de la couche de travail.

Un dernier mode de réalisation de cette variante consiste en une évolution de l'angle telle que des valeurs données soient obtenues pour des positions axiales données.

En d'autres termes, il peut être souhaité d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 90°, peut être souhaitée sur les bords de la couche de travail ou plus exactement au niveau des épaules du pneumatique pour améliorer l'adhérence et la motricité ou le confort du pneumatique à forts carrossages ; en effet, de tels angles permettent de modifier localement les rigidités de la structure de renforcement.

Dans une variante de réalisation avantageuse de l'invention, une couche d'éléments de renforcement circonférentiels peut être réalisée en plusieurs parties mises en place en différentes positions radiales ou différents niveaux du pneumatique. Un tel pneumatique selon l'invention peut notamment comporter une partie de la couche d'éléments de renforcement circonférentiels radialement à l'extérieur des autres éléments de renforcement et notamment radialement à l'extérieur de la structure de renfort de type carcasse dans la partie centrale du pneumatique, c'est-à-dire radialement à l'intérieur de la partie centrale de la bande de roulement. Cette partie de la couche de frettage permet alors notamment une protection de la carcasse contre d'éventuelles agressions pouvant intervenir par la partie centrale de la bande de roulement, considérée comme la plus exposée. Des parties latérales de la couche d'éléments de renforcement circonférentiels, indépendantes de la partie centrale de ladite couche d'éléments de renforcement circonférentiels, peuvent être positionnées à tous niveaux, c'est-à-dire soit radialement à l'intérieur les couches de travail soit entre-elles soit et, selon l'invention, radialement intérieure à la couche de carcasse. L'invention prévoit encore, dans le cas d'une couche d'éléments de renforcement circonférentiels réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement circonférentiels comme énoncé précédemment.

Conformément à ce type de réalisation d'une couche d'éléments de renforcement circonférentiels fractionnée en plusieurs parties, l'invention prévoit avantageusement un recouvrement des extrémités axiales desdites parties entre-elles.

Une réalisation avantageuse de l'invention prévoit que la couche d'éléments de renforcement circonférentiels est positionnée au moins partiellement radialement à l'extérieur d'une couche de travail. Lorsque la couche d'éléments de renforcement circonférentiels est réalisée radialement à l'extérieur de deux couches de travail et placée directement radialement à l'intérieur de la bande de roulement, elle peut notamment contribuer à l'amélioration de la stabilité à haute vitesse et protéger les couches de travail.

La couche d'éléments de renforcement circonférentiels peut ainsi être réalisée partiellement directement sous la bande de roulement pour former outre sa fonction première une couche de protection de la nappe carcasse et des autres couches de la structure de renforcement de sommet, contre des agressions mécaniques éventuelles.

Selon d'autres réalisations avantageuses de l'invention, la couche d'éléments de renforcement circonférentiels peut encore être réalisée entre les couches de travail, notamment par souci économique, la quantité de matière et le temps de pose étant ainsi encore diminués.

Une autre réalisation avantageuse de l'invention prévoit que la couche d'éléments de renforcement circonférentiels est positionnée au moins partiellement radialement à l'intérieur de la couche de travail radialement la plus à l'intérieure. Selon cette réalisation, la couche d'éléments de renforcement circonférentiels est réalisée radialement à l'intérieur des couches de travail et peut notamment permettre d'améliorer la motricité et l'adhérence du pneumatique.

Il est en outre également prévu selon l'invention que la carcasse puisse couvrir la structure complète de renforcement de sommet.

Toutefois une réalisation préférée de l'invention prévoit qu'au moins une partie d'une couche de renforcement de sommet est mise en place entre la carcasse et la bande de roulement pour garantir une protection de la carcasse.

Selon une réalisation préférée de l'invention, les éléments de renforcement des couches de travail sont en matériau textile.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

D'autres détails et caractéristiques avantageux de l'invention ressortiront ci-après de la description des exemples de réalisation de l'invention en référence aux figures 1 à 5 qui représentent :
- figure 1, une vue méridienne d'un schéma d'un pneumatique selon un mode de réalisation,
- figure 2, une vue méridienne d'un schéma d'un pneumatique selon un second mode de réalisation,
- figure 3, une vue méridienne d'un schéma d'un pneumatique selon un troisième mode de réalisation,
- figure 4, une vue méridienne d'un schéma d'un pneumatique selon un quatrième mode de réalisation,
- figure 5, une vue méridienne d'un schéma d'un pneumatique selon l'invention.

Les figures ne sont pas représentées à l'échelle pour en simplifier la compréhension.

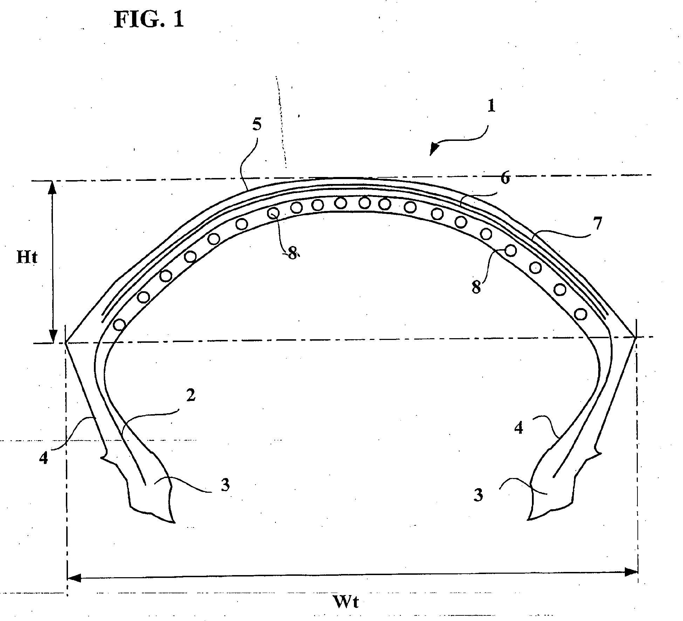

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée, de manière non représentée sur les figures, de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Entre la carcasse et la bande de roulement est mise en place une armature de sommet constituée dans le cas présent de deux couches de travail 6, 7 constitués d'éléments de renforcement textiles. La disposition des fils est telle qu'ils sont croisés d'une couche 6 à la couche 7 suivante.

Une couche d'éléments de renforcement circonférentiels 8 est positionnée radialement à l'intérieur de la couche de carcasse 2 et constitue ainsi la partie de l'armature de sommet radialement intérieure.

La couche d'éléments de renforcement circonférentiels 8 est avantageusement constituée d'un seul fil enroulé pour former un angle avec la direction longitudinale sensiblement égal à 0°. La couche d'éléments de renforcement circonférentiels 8 peut encore être réalisée par l'enroulement simultané de plusieurs fils nus ou sous forme de bandelettes lorsqu'ils sont noyés dans du caoutchouc.

En outre, le pas entre les éléments de renforcement circonférentiels varie sur une partie de la couche d'éléments de renforcement circonférentiels selon la direction transversale ou axiale conformément à l'invention de sorte que ledit pas soit plus petit au sommet du pneumatique qu'au bord de la couche d'éléments de renforcement circonférentiels.

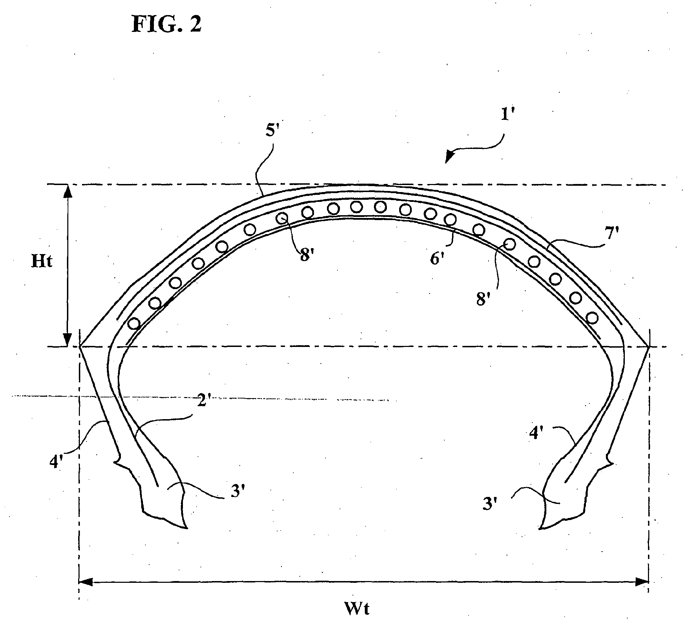

La figure 2 représente une variante de réalisation utilisable dans l'invention. Selon cette variante de réalisation, la couche d'éléments de renforcement circonférentiels 8' est réalisée radialement à l'intérieur de la couche de carcasse 2', entre deux couches de travail 6' et 7' semblables à celle de la figure 1. Selon la représentation de cette variante de réalisation, la couche d'éléments de renforcement circonférentiels 8' et la couche de travail 6' sont mises en place radialement à l'intérieur de la couche de carcasse 2' et la couche de travail 7' est positionnée radialement à l'extérieur de la couche de carcasse 2'.

Selon d'autres variantes de réalisation de l'invention non représentées, l'ensemble de la structure de renforcement de sommet peut être mise en place radialement à l'intérieur de la couche de carcasse 2', la couche de carcasse 2' couvrant l'ensemble de la structure de renforcement de sommet. La couche d'éléments de renforcement circonférentiels 8' peut encore être positionnée radialement à l'intérieur ou à l'extérieur des couches de travail 6', 7'.

Il est encore possible de réaliser des pneumatiques conformes à l'invention selon lesquels uniquement une des couches de travail 6', 7' est mise en place radialement à l'intérieur de la nappe de carcasse, ladite couche de travail 6', 7' étant radialement à l'extérieur de la couche d'éléments de renforcement circonférentiels 8'.

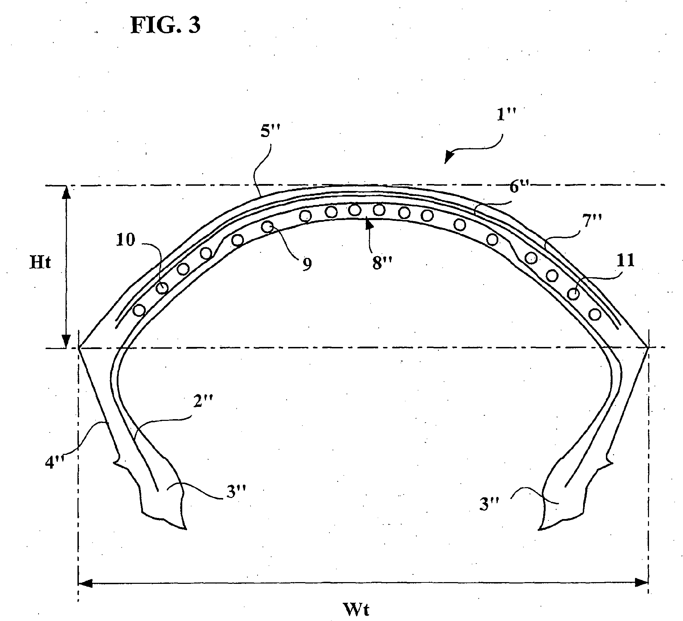

La figure 3 représente une variante utilisable dans l'invention selon laquelle la couche d'éléments de renforcement circonférentiels 8" est réalisée en plusieurs parties 9, 10, 11 mises en place dans le pneumatique à des positions radialement différentes. De telles réalisations peuvent permettre par exemple de conserver localement un rôle de protection de la couche de frettage notamment à l'égard de la nappe carcasse tout en diminuant les coûts de fabrication en réalisant partiellement ladite couche d'éléments de renforcement circonférentiels 8" dans des positions radialement inférieures. Ce choix peut également influencer d'autres propriétés du pneumatique qui ne sont recherchées que localement. Dans le cas représenté sur la figure 3, la position des parties axialement extérieures 10, 11 radialement à l'intérieur des couches de travail 6", 7"autorise notamment l'amélioration de la stabilité à forts carrossages.

Une telle réalisation de la couche d'éléments de renforcement circonférentiels 8" en plusieurs parties peut encore être combinée aux différentes variantes de réalisation de l'invention présentées précédemment. Il est notamment possible de réaliser une couche d'éléments de renforcement circonférentiels 8" partiellement ou complètement radialement à l'intérieur, radialement à l'extérieur ou entre les couches de travail 6", 7".

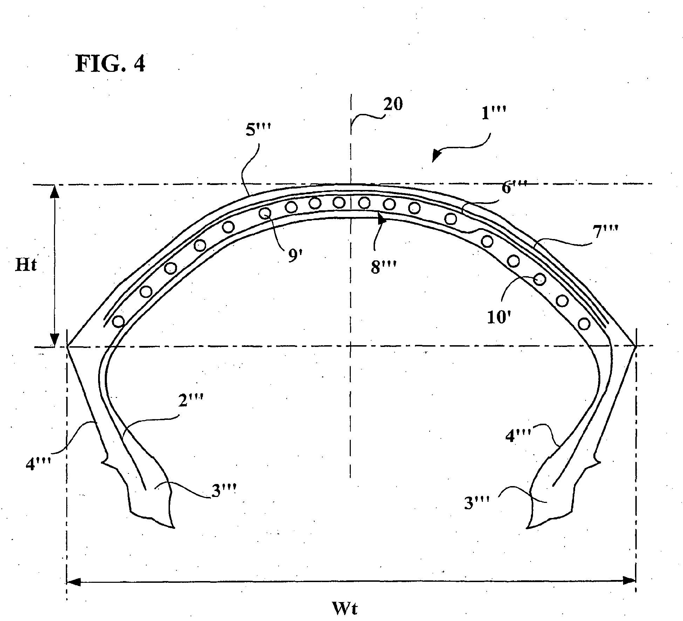

La figure 4 représente, comme dans le cas de la figure 3, un mode de réalisation utilisable dans l'invention selon lequel la couche d'éléments de renforcement circonférentiels 8'" est réalisée en plusieurs parties 9', 10', mises en place sur le pneumatique à des niveaux radialement différents. Contrairement au cas de la figure 3, la représentation faite sur cette figure 4 ne présente pas de symétrie par rapport au plan équatorial 20. Une telle réalisation peut notamment être recherchée lorsque l'usage du pneumatique ne sera lui-même pas symétrique ; par exemple, dans le cas de pneumatiques devant être utilisés sur des circuits spécifiques sollicitant le pneumatique en carrossage selon essentiellement un côté. En effet, la réalisation d'un tel pneumatique peut notamment être intéressante pour un usage sur piste où la majorité des courbes ou virages sont dans la même direction.

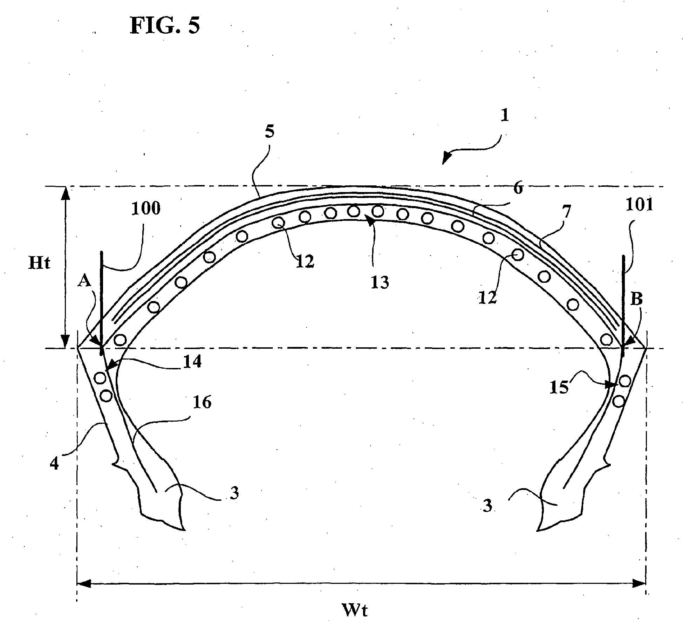

La figure 5 représente un mode de réalisation de l'invention selon lequel la couche d'éléments de renforcement circonférentiels 12 est réalisée en plusieurs parties 13, 14, 15, deux parties 14 et 15 s'étendant dans une partie des flancs. Selon l'invention, la partie centrale 13 de la couche 12 est mise en place radialement à l'extérieur des points A et B et les parties 14 et 15 sont mises en place radialement à l'intérieur des points A et B. Les points A et B sont les points de tangence de l'abscisse curviligne de la structure de renfort de type carcasse avec les perpendiculaires 100, 101 à l'axe de rotation. Selon ce mode de réalisation de l'invention, en vue d'optimiser les coûts de production, les parties 14 et 15 sont mises en place axialement à l'extérieur de la structure de renfort de type carcasse 16 pour être positionnée sur un diamètre le plus petit possible. Pour les mêmes raisons, la partie 12 est positionnées axialement à l'intérieur de la structure de renfort de type carcasse 16. Une telle réalisation peut bien entendu être associée à des représentations telles que celles faites sur les figures précédentes, la partie 13 de la couche d'éléments de renforcement circonférentiels pouvant être combinée à des couches de travail 17, 18 selon les différentes configurations précédemment évoquées et/ou être réalisée en plusieurs parties pour être par exemple mise en place partiellement radialement à l'extérieur de la structure de renfort de type carcasse.

Des réalisations de ce type conforme à l'invention autorisent, comme évoqué précédemment, un gain économique de deux ordres. Tout d'abord la quantité de matière utilisée pour réaliser une couche d'éléments de renforcement circonférentiels est diminuée du fait de la position radiale inférieure de la couche 8' inférieure à celle d'un pneumatique usuel dans lequel la couche d'éléments de renforcement circonférentiels est mise en place radialement à l'extérieur de la structure de renfort de type carcasse. Et en conséquence, le temps de pose du fil de renforcement de la dite couche d'éléments de renforcement circonférentiels est inférieur à celui nécessaire pour la réalisation de la couche d'éléments de renforcement circonférentiels d'un pneumatique usuel. La quantité de matière peut encore être réduite du fait de la pose selon un pas variable qui permet d'optimiser la quantité de matière nécessaire selon la direction transversale.

## Revendications

1. Pneumatique (1) comportant au moins une structure de renfort de type carcasse (2), formée d'éléments de renforcement, ancrée de chaque côté du pneumatique à un bourrelet (3) dont la base est destinée à être montée sur un siège de jante, chaque bourrelet se prolongeant radialement vers l'extérieur par un flanc (4), les flancs rejoignant radialement vers l'extérieur une bande de roulement (5), et comportant sous la bande de roulement une structure de renforcement de sommet comportant une seule couche d'éléments de renforcement circonférentiels (8) s'étendant dans les flancs au-delà des points de tangence (A, B) de l'abscisse curviligne de la structure de renfort de type carcasse (2) avec des perpendiculaires (100, 101) à l'axe de rotation, **tel que** selon le profil du pneumatique dans un plan radial, ladite couche d'éléments circonférentiels (8) est au moins partiellement radialement intérieure à la partie d'au moins une structure de renfort de type carcasse radialement extérieure aux deux points de tangence (A, B) de l'abscisse curviligne de la structure de renfort de type carcasse (2) avec des perpendiculaires à l'axe de rotation, et tel que selon le profil du pneumatique dans un plan radial, la partie(14, 15) de la couche d'éléments circonférentiels (8), radialement intérieure aux deux points de tangence de l'abscisse curviligne de la structure de renfort de type carcasse avec des perpendiculaires à l'axe de rotation est radialement intérieure à la structure de renfort de type carcasse, radialement intérieure aux deux points de tangence de l'abscisse curviligne de la structure de renfort de type carcasse avec des perpendiculaires à l'axe de rotation, **caractérisé en ce que** lesdits éléments de renforcement circonférentiels sont répartis selon la direction transversale avec un pas variable.

2. Pneumatique (1) selon la revendication 1, **caractérisé en ce que** ledit pas de répartition des éléments de renforcement circonférentiels (8) au centre (sommet) de la bande de roulement est moins important qu'aux bords de ladite couche d'éléments de renforcement circonférentiels.

3. Pneumatique (1) selon la revendication 1, **caractérisé en ce que** ledit pas de répartition des éléments de renforcement circonférentiels (8) au centre (sommet) de la bande de roulement est plus important qu'aux bords de ladite couche d'éléments de renforcement circonférentiels.

4. Pneumatique (1) selon la revendication 1 à 3, **caractérisé en ce que** la valeur du pas selon la direction transversale obéit à une suite mathématique croissante sur au moins une partie de la largeur axiale de ladite couche.

5. Pneumatique (1) selon l'une des revendications 1 à 4, **caractérisé en ce que** la valeur du pas obéit à une suite arithmétique de type U(n) = Uo + nr, avec Uo compris entre 0,4 mm et 2,5 mm, et r, la raison de la suite compris entre 0,001 et 0,1.

6. Pneumatique selon l'une des revendications 1 à 4, **caractérisé en ce que** la valeur du pas obéit à une suite géométrique de type U(n) = Uo x rⁿ, avec Uo compris entre 0,4 mm et 2,5 mm, et r, la raison de la suite compris entre 1,001 et 1,025.

7. Pneumatique (1) selon l'une des revendications précédentes, **caractérisé en ce que** les éléments de renforcement de la structure de renfort de type carcasse (2) font avec la direction circonférentielle un angle compris entre 65° et 90°.

8. Pneumatique (1) selon la revendication précédentes, **caractérisé en ce que** la structure de renforcement de sommet comporte au moins une couche de travail (6, 7) constituée d'éléments de renforcements et **en ce qu'**au moins dans la zone centrale de ladite couche de travail lesdits éléments de renforcement forment un angle avec la direction longitudinale compris entre 10 et 80°.

9. Pneumatique (1) selon la revendication 8, **caractérisé en ce que** la structure de renforcement de sommet comporte au moins deux couches (6, 7) de travail constituées d'éléments de renforcement et **en ce qu'**au moins dans la zone centrale de ladite couche de travail d'une couche à la suivante lesdits éléments forment entre eux des angles compris entre 20 et 160°.

10. Pneumatique (1) selon la revendication 8 ou 9, **caractérisé en ce que** la couche d'éléments de renforcement circonférentiels (8) est positionnée au moins partiellement radialement à l'extérieur d'une couche de travail.

11. Pneumatique (1) selon la revendication 8 à 10, **caractérisé en ce que** la couche d'éléments de renforcement circonférentiels (8) est positionnée au moins partiellement radialement à l'intérieur de la couche de travail (6) radialement la plus à l'intérieure.

12. Pneumatique (1) selon lune des revendications 8 à 11, **caractérisé en ce que** les angles formés par lesdits éléments de renforcement des couches de travail (6, 7) avec la direction longitudinale sont variables selon la direction transversale et **en ce que** lesdits angles sont supérieurs sur les bords axialement extérieurs des couches de travail par rapport aux angles desdits éléments de renforcement mesurés au niveau du plan équatorial du pneumatique.

13. Pneumatique (1) selon l'une des revendications 8 à 12, **caractérisé en ce que** les éléments de renforcement des couches de travail (6, 7) sont en matériau textile.

14. Pneumatique (1) selon l'une des revendications précédentes, **caractérisé en ce que** les éléments de renforcement circonférentiels (8) sont métalliques et/ou textiles et/ou en verre.

15. Pneumatique (1) selon la revendication 14, **caractérisé en ce que** les éléments de renforcement circonférentiels (8) présentent un module d'élasticité supérieur à 6000 N/mm².

16. Utilisation d'un pneumatique tel que décrit selon l'une des revendications 1 à 15 pour un véhicule motorisé à deux roues tel qu'une motocyclette.

## Patentansprüche

1. Reifen (1), der mindestens eine Verstärkungsstruktur von der Art Karkasse (2) aufweist, die von Verstärkungselementen geformt wird, zu beiden Seiten des Reifens an einem Wulst (3) verankert ist, dessen Basis dazu bestimmt ist, auf einen Felgensitz montiert zu werden, wobei jeder Wulst sich radial nach außen durch eine Flanke (4) verlängert, wobei die Flanken sich radial nach außen an einen Laufstreifen (5) anschließen, und unter dem Laufstreifen eine Scheitelverstärkungsstruktur aufweist, die eine einzige Schicht von Umfangsverstärkungselementen (8) aufweist, die sich in den Flanken über die Berührungspunkte (A, B) der gekrümmten Abszisse der Verstärkungsstruktur von der Art Karkasse (2) mit Lotrechten (100, 101) zur Drehachse hinaus erstreckt, derart, dass gemäß dem Profil des Reifens in einer radialen Ebene die Schicht von Umfangselementen (8) sich mindestens teilweise radial innen bezüglich des Teils mindestens einer Verstärkungsstruktur von der Art Karkasse befindet, der sich radial außen bezüglich der zwei Berührungspunkte (A, B) der gekrümmten Abszisse der Verstärkungsstruktur von der Art Karkasse (2) mit Lotrechten zur Drehachse befindet, und derart, dass gemäß dem Profil des Reifens in einer radialen Ebene der Teil (14, 15) der Schicht von Umfangselementen (8) radial innen bezüglich der zwei Berührungspunkte der gekrümmten Abszisse der Verstärkungsstruktur von der Art Karkasse mit Lotrechten zur Drehachse sich radial innen bezüglich der Verstärkungsstruktur von der Art Karkasse befindet, die sich radial innen bezüglich der zwei Berührungspunkte der gekrümmten Abszisse der Verstärkungsstruktur von der Art Karkasse mit Lotrechten zur Drehachse befindet, **dadurch gekennzeichnet, dass** die Umfangsverstärkungselemente in Querrichtung mit einem variablen Abstand verteilt sind.

2. Reifen (1) nach Anspruch 1, **dadurch gekennzeichnet, dass** der Verteilungsabstand der Umfangsverstärkungselemente (8) in der Mitte (Scheitel) des Laufstreifens weniger groß ist als an den Rändern der Schicht von Umfangsverstärkungselementen.

3. Reifen (1) nach Anspruch 1, **dadurch gekennzeichnet, dass** der Verteilungsabstand der Umfangsverstärkungselemente (8) in der Mitte (Scheitel) des Laufstreifens größer ist als an den Rändern der Schicht von Umfangsverstärkungselementen.

4. Reifen (1) nach Anspruch 1 bis 3, **dadurch gekennzeichnet, dass** der Wert des Abstands in Querrichtung über mindestens einen Teil der axialen Breite der Schicht einer ansteigenden mathematischen Folge folgt.

5. Reifen (1) nach einem der Ansprüche 1 bis 4, **dadurch gekennzeichnet, dass** der Wert des Abstands einer arithmetischen Folge der Art U (n) = Uo + nr folgt, mit Uo zwischen 0,4 mm und 2,5 mm, und r, mit dem Quotient der Folge zwischen 0,001 und 0,1.

6. Reifen nach einem der Ansprüche 1 bis 4, **dadurch gekennzeichnet, dass** der Wert des Abstands einer geometrischen Folge der Art U (n) = Uo x rⁿ folgt, mit Uo zwischen 0,4 mm und 2,5 mm und r, mit dem Quotient der Folge zwischen 1,001 und 1,025.

7. Reifen (1) nach einem der vorhergehenden Ansprüche, **dadurch gekennzeichnet, dass** die Verstärkungselemente der Verstärkungsstruktur von der Art Karkasse (2) mit der Umfangsrichtung einen Winkel zwischen 65° und 90° formen.

8. Reifen (1) nach dem vorhergehenden Anspruch, **dadurch gekennzeichnet, dass** die Scheitelverstärkungsstruktur mindestens eine Arbeitsschicht (6, 7) aufweist, die aus Verstärkungselementen besteht, und dass mindestens im zentralen Bereich der Arbeitsschicht die Verstärkungselemente einen Winkel zwischen 10 und 80° mit der Längsrichtung formen.

9. Reifen (1) nach Anspruch 8, **dadurch gekennzeichnet, dass** die Scheitelverstärkungsstruktur mindestens zwei Arbeitsschichten (6, 7) aufweist, die aus Verstärkungselementen bestehen, und dass mindestens im zentralen Bereich der Arbeitsschicht von einer Schicht zur anderen die Elemente untereinander Winkel zwischen 20 und 160° formen.

10. Reifen (1) nach Anspruch 8 oder 9, **dadurch gekennzeichnet, dass** die Schicht von Umfangsverstärkungselementen (8) zumindest teilweise radial außen bezüglich einer Arbeitsschicht positioniert ist.

11. Reifen (1) nach Anspruch 8 bis 10, **dadurch gekennzeichnet, dass** die Schicht von Umfangsverstärkungselementen (8) zumindest teilweise radial innen bezüglich der radial am weitesten innen liegenden Arbeitsschicht (6) positioniert ist.

12. Reifen (1) nach einem der Ansprüche 8 bis 11, **dadurch gekennzeichnet, dass** die von den Verstärkungselementen der Arbeitsschichten (6, 7) mit der Längsrichtung geformten Winkel gemäß der Querrichtung variabel sind, und dass die Winkel an den axial äußeren Rändern der Arbeitsschichten bezüglich der Winkel der Verstärkungselemente gemessen im Bereich der Äquatorialebene des Reifens größer sind.

13. Reifen (1) nach einem der Ansprüche 8 bis 12, **dadurch gekennzeichnet, dass** die Verstärkungselemente der Arbeitsschichten (6, 7) aus Textilmaterial sind.

14. Reifen (1) nach einem der vorhergehenden Ansprüche, **dadurch gekennzeichnet, dass** die Umfangsverstärkungselemente (8) aus Metall und/oder Textil und/oder Glas sind.

15. Reifen (1) nach Anspruch 14, **dadurch gekennzeichnet, dass** die Umfangsverstärkungselemente (8) einen Elastizitätsmodul von mehr als 6000 N/mm² aufweisen.

16. Verwendung eines wie nach einem der Ansprüche 1 bis 15 beschriebenen Reifens für ein zweirädriges Fahrzeug wie einem Motorrad.

## Claims

1. A tyre (1) comprising at least one carcass-type reinforcement structure (2), formed of reinforcement elements, anchored on either side of the tyre to a bead (3) whose base is intended to be mounted on a rim seat, each bead being extended radially towards the outside by a sidewall (4), the sidewalls meeting up radially towards the outside with a tread (5), and comprising under the tread a crown reinforcement structure comprising a layer of circumferential reinforcement elements (8) extending in the sidewalls beyond the points of tangency (A, B) of the curvilinear abscissa of the carcass-type reinforcement structure (2) with perpendiculars (100, 101) to the axis of rotation, **such that,** in accordance with the profile of the tyre in a radial plane, said layer of circumferential elements (8) is at least in part radially to the inside of the part of at least one carcass-type reinforcement structure radially to the outside of the two points of tangency (A, B) of the curvilinear abscissa of the carcass-type reinforcement structure (2) and such that, in accordance with the profile of the tyre in a radial plane, the part (14, 15) of the layer of circumferential elements (8), radially to the inside of the two points of tangency of the curvilinear abscissa of the carcass-type reinforcement structure with perpendiculars to the axis of rotation is radially to the inside of the carcass-type reinforcement structure, radially to the inside of the two points of tangency of the curvilinear abscissa of the carcass-type reinforcement structure with perpendiculars to the axis of rotation with perpendiculars to the axis of rotation, **characterised in that** said circumferential reinforcement elements are distributed in the transverse direction with a variable pitch.

2. A tyre (1) according to Claim 1, **characterised in that** said distribution pitch for the circumferential reinforcement elements (8) at the centre (crown) of the tread is smaller than at the edges of said layer of circumferential reinforcement elements.

3. A tyre (1) according to Claim 1, **characterised in that** said distribution pitch for the circumferential reinforcement elements (8) at the centre (crown) of the tread is greater than at the edges of said layer of circumferential reinforcement elements.

4. A tyre (1) according to Claims 1 to 3, **characterised in that** the value of the pitch in the transverse direction follows a mathematical progression increasing over at least part of the axial width of said layer.

5. A tyre (1) according to one of Claims 1 to 4, **characterised in that** the value of the pitch follows an arithmetic progression of the type U(n) = Uo + nr, with Uo being between 0.4 mm and 2.5 mm and r being the difference of consecutive terms of the progression, said difference being between 0.001 and 0.1.

6. A tyre (1) according to one of Claims 1 to 4, **characterised in that** the value of the pitch follows a geometric progression of the type U(n) = Uo + rⁿ, with Uo being between 0.4 mm and 2.5 mm and r being the difference of consecutive terms of the progression, said difference being between 1.001 and 1.025.

7. A tyre (1) according to one of the preceding Claims, **characterised in that** the reinforcement elements of the carcass-type reinforcement structure (2) form an angle of between 65° and 90° with the circumferential direction.

8. A tyre (1) according to the preceding Claims, **characterised in that** the crown reinforcement structure comprises at least one working layer (6, 7) consisting of reinforcement elements and **in that,** at least in the central zone of said working layer, said reinforcement elements form an angle of between 10 and 80° with the longitudinal direction.

9. A tyre (1) according to Claim 8, **characterised in that** the crown reinforcement structure comprises at least two working layers (6, 7) consisting of reinforcement elements and **in that,** at least in the central zone of said working layer, from one layer to the next said elements form between them angles of between 20 and 160°.

10. A tyre (1) according to Claim 8 or 9, **characterised in that** the layer of circumferential reinforcement elements (8) is positioned at least in part radially to the outside of a working layer.

11. A tyre (1) according to Claims 8 to 10, **characterised in that** the layer of circumferential reinforcement elements (8) is positioned at least in part radially to the inside of the working layer (6) radially furthest to the inside.

12. A tyre (1) according to one of Claims 8 to 11, **characterised in that** the angles formed by said reinforcement elements of the working layers (6, 7) with the longitudinal direction are variable in the transverse direction and **in that** said angles are greater at the axially outer edges of the working layers relative to the angles of said reinforcement elements measured at the level of the equatorial plane of the tyre.

13. A tyre (1) according to one of claims 8 to 12, **characterised in that** the working layer (6, 7) reinforcement elements are of textile material.

14. A tyre (1) according to one of the preceding claims, **characterised in that** the circumferential reinforcement elements (8) are metal and/or textile and/or glass.

15. A tyre according to Claim 14, **characterised in that** the circumferential reinforcement elements (8) exhibit a modulus of elasticity greater than 6000 N/mm².

16. Use of a tyre as described according to one of claims 1 to 15 for a two-wheeled motorised vehicle such as a motorcycle.
